(19) **Europäisches Patentamt / European Patent Office / Office européen des brevets**

(11) **EP 4 479 283 B1**

(12) **FASCICULE DE BREVET EUROPEEN**

(45) Date de publication et mention de la délivrance du brevet:
**11.03.2026 Bulletin 2026/11**

(21) Numéro de dépôt: **23701159.8**

(22) Date de dépôt: **20.01.2023**

(51) Classification Internationale des Brevets (IPC):
**B60K 35/10** *(2024.01)* **B60W 30/00** *(2006.01)*

(52) Classification Coopérative des Brevets (CPC):
**B60K 35/10**

(86) Numéro de dépôt international:
**PCT/EP2023/051408**

(87) Numéro de publication internationale:
**WO 2023/156136 (24.08.2023 Gazette 2023/34)**

(54) **PROCÉDÉ DE COMMANDE D'AU MOINS UN ÉQUIPEMENT D'UN VÉHICULE AUTOMOBILE ET VÉHICULE AUTOMOBILE ASSOCIÉ**

VERFAHREN ZUR STEUERUNG MINDESTENS EINER VORRICHTUNG EINES KRAFTFAHRZEUGS UND ZUGEHÖRIGES KRAFTFAHRZEUG

METHOD FOR CONTROLLING AT LEAST ONE DEVICE OF A MOTOR VEHICLE, AND ASSOCIATED MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.02.2022 FR 2201472**

(43) Date de publication de la demande:
**25.12.2024 Bulletin 2024/52**

(73) Titulaire: **Renault s.a.s**
**92100 Boulogne Billancourt (FR)**

(72) Inventeurs:
• **LEMONTEY, Philippe**
**78084 Guyancourt cedex (FR)**
• **THORNER, Pablo**
**78084 Guyancourt cedex (FR)**

(56) Documents cités:
**DE-A1- 102009 030 784 US-A1- 2021 403 039**

## Description

### Domaine technique de l'invention

La présente invention concerne de manière générale la commande de différents équipements d'un véhicule automobile.

Elle concerne plus particulièrement un procédé de commande d'au moins un équipement d'un véhicule automobile. Elle concerne également un véhicule comprenant un calculateur configuré pour mettre en œuvre un tel procédé de commande.

### Etat de la technique

La conduite de véhicules, lors de trajets longs ou répétitifs, peut souvent paraître lassante et entraîner un risque de déconcentration du conducteur d'un véhicule automobile. Le document US 2021/403039 Al décrit un procédé de commande d'au moins un équipement d'un véhicule automobile d'un type connu.

L'utilisation de modes de conduite, comme par exemple le mode « sport » ou le mode « confort », permet alors d'adapter l'expérience de conduite pour la rendre plus variante et attrayante quel que soit le trajet. Chacun de ces modes de conduite connus correspond à un ensemble de commandes prédéterminé. Lorsque l'un des modes est utilisé, c'est donc toujours le même ensemble de commandes qui est exécuté, rendant alors l'utilisation de ces différents modes connus lassante sur le long terme.

Il est connu du document EP2895352 d'adapter l'éclairage dans l'habitacle du véhicule automobile en fonction de la luminosité ambiante et des objets présents à proximité du véhicule automobile (typiquement en fonction de la couleur de ces objets). Cela permet alors d'ajuster l'éclairage dans l'habitacle en fonction de l'environnement extérieur au véhicule automobile, et donc d'améliorer l'expérience de conduite des occupants du véhicule automobile.

Cependant, ce document concerne uniquement l'adaptation de l'éclairage dans l'habitacle du véhicule pour améliorer cette expérience de conduite. Cela peut être insuffisant ou inadapté dans certaines situations, par exemple en cas de danger imminent où une modification de l'éclairage ne permettra pas d'alerter suffisamment le conducteur.

### Présentation de l'invention

La présente invention propose d'améliorer la commande des équipements d'un véhicule automobile de manière à rendre la conduite moins monotone et plus attrayante.

Plus particulièrement, on propose selon l'invention un procédé de commande d'au moins un équipement d'un véhicule automobile, suivant les caractéristiques de la revendication 1.

Ainsi, grâce à l'invention, la commande des différents équipements du véhicule automobile est effectuée sur la base des caractéristiques instantanées du véhicule et de son environnement. Les occupants du véhicule automobile sont donc immergés dans une ambiance multisensorielle qui varie en fonction du contexte concernant le véhicule. Cela permet alors de rendre le trajet moins monotone.

Par ailleurs, grâce à l'invention, les ambiances multisensorielles proposées sont suffisamment variées pour éviter que les occupants du véhicule ne se lassent.

D'autres caractéristiques avantageuses et non limitatives du procédé de commande conforme à l'invention, prises individuellement ou selon toutes les combinaisons techniquement possibles, sont les suivantes :

- il est également prévu une étape d'évaluation d'un critère supplémentaire relatif à la pertinence d'un changement de profil de commande dudit au moins un équipement, ladite étape d'émission du deuxième profil de commande étant mise en œuvre si le critère supplémentaire évalué est vérifié ;
- le critère supplémentaire dépend de la durée écoulée depuis la sélection du premier profil de commande ou d'une fréquence de changement de profils de commande ou de la présence d'un point d'intérêt identifié dans l'environnement du véhicule automobile ;
- le critère supplémentaire dépend également d'un indicateur de préférence associé à un occupant du véhicule automobile ;
- la sélection du deuxième profil de commande est mise en œuvre par la détermination, pour chaque profil de commande prédéterminé, d'un paramètre d'opportunité de changement de commande, en fonction dudit vecteur actualisé et d'un vecteur de profil correspondant à ce profil de commande prédéterminé ;
- pour chaque profil de commande prédéterminé, le paramètre d'opportunité de changement de commande est déterminé par le calcul d'une distance entre le vecteur actualisé et le vecteur de profil correspondant à ce profil de commande ;
- le deuxième profil de commande est sélectionné comme correspondant au paramètre d'opportunité de changement de commande associé à la plus petite distance calculée ;
- il est également prévu des étapes de :

    a1) localisation d'un point d'intérêt ponctuel et/ou local dans l'environnement du véhicule automobile,
    b1) détermination d'un profil de commande spécifique associé audit point d'intérêt, et
    c1) émission dudit profil de commande spécifique de manière à commander ledit au moins un équipement du véhicule automobile ;

- l'émission du profil de commande spécifique se produit de manière ponctuelle pendant une durée prédéterminée, ladite durée prédéterminée étant préférentiellement associée au point d'intérêt ; et
- il est également prévu, en amont, des étapes de :

a2) détermination d'une première liste d'instructions pour un premier équipement du véhicule automobile,
b2) détermination d'une deuxième liste d'instructions pour un deuxième équipement du véhicule automobile,
c2) détermination d'une matrice finale par combinaison de manière synchrone de la première et de la deuxième liste d'instructions, et
d2) détermination d'un profil de commande sur la base de la matrice finale déterminée afin de commander de manière synchronisée le premier équipement et le deuxième équipement.

L'invention concerne également un véhicule automobile comprenant un calculateur configuré pour mettre en œuvre un procédé de commande tel qu'introduit précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Description détaillée de l'invention**

La description qui va suivre en regard des dessins annexés, donnés à titre d'exemples non limitatifs, fera bien comprendre en quoi consiste l'invention et comment elle peut être réalisée.

Sur les dessins annexés :

[Fig.1] représente une vue schématique du dessus d'un véhicule automobile ;
[Fig.2] représente, sous forme de logigramme, un exemple de procédé de commande d'un équipement du véhicule automobile conforme à l'invention ; et
[Fig.3] représente, sous forme de logigramme, un exemple de procédé préliminaire conforme à l'invention.

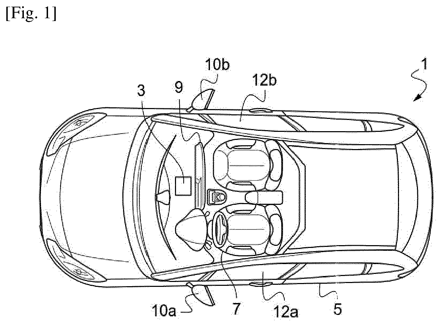

Sur la [Fig.1], on a représenté une vue du dessus d'un véhicule automobile 1 (également appelé véhicule 1 dans la suite). Classiquement, ce véhicule automobile 1 comporte quatre roues, un châssis qui supporte notamment un groupe motopropulseur (à savoir un moteur et des moyens de transmission du couple moteur aux roues motrices), une colonne de direction, des éléments de carrosserie 5 et des éléments d'habitacle 7. Le véhicule automobile 1 comprend par exemple deux rétroviseurs extérieurs 10a, 10b.

De manière générale, le véhicule automobile 1 comprend différents équipements permettant de le faire fonctionner, d'assurer la sécurité des occupants du véhicule automobile 1 mais également d'assurer le confort des occupants lors du déplacement du véhicule automobile 1. Le véhicule automobile 1 comprend au moins deux équipements de type différent, c'est-à-dire configurés pour exercer des fonctions différentes.

Ces équipements sont, par exemple et de manière non limitative, les haut-parleurs et les éléments d'éclairage présents dans l'habitacle 7 du véhicule automobile 1, les moyens de transmission du couple moteur, les organes de direction assistée, les organes de frein, les mécanismes permettant le réglage des rétroviseurs extérieurs 10a, 10b, les mécanismes de pilotage des fenêtres 12a, 12b, un écran d'affichage situé sur un tableau de bord 9 présent dans l'habitacle 7 du véhicule automobile 1, etc.

Comme le montre la [Fig.1], le véhicule automobile 1 comprend également un calculateur 3. Ce calculateur 3 comprend par exemple un processeur, une mémoire interne, des convertisseurs analogiques-numériques et différentes interfaces d'entrée et/ou de sortie.

Grâce à ses interfaces d'entrée, le calculateur 3 est configuré pour recevoir des données d'entrée provenant des différents capteurs présents dans le véhicule automobile 1.

La mémoire du calculateur 3 mémorise une application informatique, constituée de programmes d'ordinateur comprenant des instructions dont l'exécution par le processeur permet la mise en œuvre par le calculateur 3 des procédés décrits ci-après.

Cette mémoire mémorise également différentes bases de données comprenant par exemple des données de cartographie ou de navigation. Elle mémorise également des profils de commande prédéterminés tels que décrits ultérieurement.

Enfin, grâce à ses interfaces de sortie, le calculateur 3 est configuré pour contrôler et commander les différents équipements du véhicule automobile 1. Par exemple, le calculateur 3 peut transmettre une consigne de pilotage à un actionneur couplé à un équipement particulier du véhicule automobile 1, l'actionneur étant par exemple destiné à modifier la position de l'équipement concerné.

Le calculateur 3 est programmé pour mettre en œuvre un procédé de commande d'au moins un équipement du véhicule automobile 1.

Selon l'invention, ce procédé de commande vise à commander les différents équipements du véhicule automobile 1, sur la base des caractéristiques instantanées du véhicule et de son environnement, afin de rendre la conduite moins monotone et plus immersive.

Plus particulièrement, la commande des différents équipements du véhicule automobile permet de déclencher des ambiances multisensorielles de manière à assister le conducteur d'un point de vue sécuritaire (en l'alertant sur une zone à risque par exemple) mais également à mettre en scène son trajet continûment et à attirer son attention sur des points particuliers de l'environnement extérieur, à des fins de tourisme.

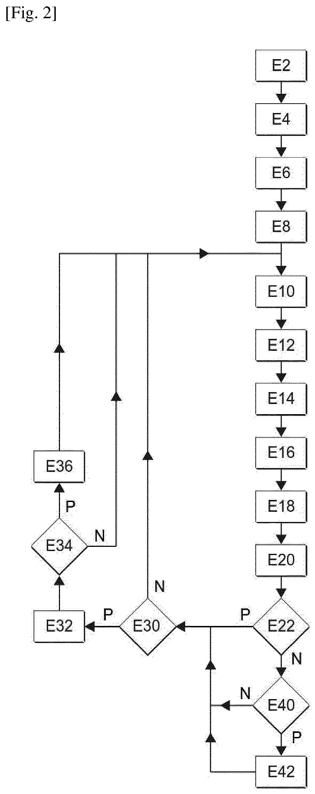

Pour cela, le procédé de commande comprend une succession d'étapes représentée, sur la [Fig.2], sous la forme d'un logigramme.

Comme le montre cette figure, le procédé débute à l'étape E2 d'initialisation d'une variable temporelle t. Cette variable temporelle t correspond à l'instant de début de mise en œuvre du procédé. Par exemple ici, cette variable temporelle t est initialisée à l'instant $t_0$.

Le procédé se poursuit ensuite avec l'étape E4. Lors de cette étape, le calculateur 3 reçoit une pluralité de données initiales. Ces données initiales caractérisent, de manière générale, un état du véhicule automobile 1 et l'environnement extérieur au véhicule automobile 1 à l'instant $t_0$.

Plus précisément, l'état du véhicule automobile 1 est caractérisé notamment par des données spécifiant l'état des différents équipements du véhicule automobile 1. Par exemple, les données initiales caractérisent le régime moteur, le statut d'ouverture ou de fermeture des fenêtres, l'état des équipements d'éclairage du véhicule automobile, etc.

Les données initiales concernant l'environnement extérieur au véhicule automobile 1 répertorient par exemple la luminosité extérieure, les panneaux de signalisation routière entourant le véhicule 1, l'état de la circulation (avec la présence ou non d'encombrement de certains axes routiers) ou encore la présence d'événements particuliers, comme des manifestations ou des événements sportifs, susceptibles de perturber la circulation à proximité du véhicule automobile 1.

Ces données initiales comprennent également des données concernant les occupants du véhicule automobile 1 et plus particulièrement concernant le conducteur du véhicule 1. Par exemple, les données initiales caractérisent le profil du conducteur avec son âge, ses préférences de réglages, son état physiologique ou mental ou encore la direction de regard du conducteur à l'instant $t_0$.

En pratique, certaines de ces données initiales sont mémorisées dans la mémoire du calculateur 3 en amont de la mise en œuvre du procédé et sont donc disponibles directement depuis cette mémoire (comme c'est le cas par exemple des préférences des occupants du véhicule automobile 1).

Pour d'autres données initiales, comme par exemple la direction du regard du conducteur, la luminosité extérieure ou le régime moteur, les capteurs appropriés transmettent les informations nécessaires pour que le calculateur 3 détermine les données recherchées.

A titre d'exemple, ces données initiales peuvent comprendre l'information de navigation selon laquelle le véhicule automobile 1 rejoint une portion d'autoroute. Elles peuvent aussi répertorier les préférences du conducteur lorsqu'il se déplace sur une autoroute (musique diffusée par les haut-parleurs rythmée, ventilation moyenne, température à 19 degrés, etc). Ces données initiales peuvent également indiquer le moment de journée correspondant à l'instant courant (aube, matin, mi-journée, après-midi, crépuscule, soirée, nuit, chacun de ces paramètres étant par exemple définis en fonction d'une plage horaire associée) ou les préférences de réglage de luminosité du conducteur (cette donnée étant par exemple une valeur comprise entre 0 et 1, avec 0 correspondant à une obscurité totale et 1 correspondant à une pleine luminosité).

Le procédé se poursuit à l'étape E6 lors de laquelle le calculateur 3 détermine un vecteur initial. Ce vecteur initial comprend des valeurs obtenues par des calculs utilisant les données initiales reçues à l'étape E4. Dans cette description, le terme vecteur se réfère à une grandeur recensant un ensemble de paramètres (ici les valeurs calculées à partir des données initiales). Le vecteur initial est ici de dimension supérieure ou égale à 2.

Ce vecteur initial comprend donc ici autant de paramètres qu'il y a de valeurs calculées à partir des données initiales et représente le véhicule automobile 1 sous la forme d'un paramétrage du profil de commande souhaitable du véhicule automobile 1 à l'instant $t_0$.

Étant donnée la définition des données initiales, les paramètres formant le vecteur initial sont donc déterminés en temps réel. Ils sont obtenus à partir des données mémorisées dans les différentes bases de données de la mémoire du calculateur 3, ou issues des capteurs présents dans le véhicule automobile 1. En variante, certains de ces paramètres peuvent être obtenus à partir d'algorithmes, par exemple des méthodes d'apprentissage automatique.

Finalement, le vecteur initial retranscrit toutes les données initiales de manière à pouvoir être transformées ensuite sous forme d'instructions de commande par le calculateur 3.

Dans l'exemple mentionné précédemment, le vecteur initial retranscrit donc le fait que le véhicule automobile a rejoint une portion d'autoroute, et les préférences du conducteur associées à ce type de route.

A titre d'exemple, le vecteur initial comprend un paramètre retranscrivant la luminosité cible pour la commande du véhicule automobile 1. Cette luminosité cible dépend du moment de la journée correspondant à l'instant $t_0$ et des préférences de réglage de luminosité du conducteur.

Par exemple, cette luminosité cible peut s'exprimer selon la formule suivante :

[Math.1]
$$Lum_c = f\,ct\!\left(mmt_{jour}\right) \times pref_{lum}$$

avec $Lum_c$, la luminosité cible, $mmt_{jour,}$ le moment de la journée correspondant, $pref_{lum,}$ les préférences de réglage de luminosité du conducteur et fct, une fonction de moment du la journée, cette fonction prenant des valeurs comprises entre 0,2 (correspondant à la luminosité minimale pendant la nuit) et 1 (correspondant à une luminosité maximale obtenue à midi). Préférentiellement, cette fonction ne prend pas une valeur minimale nulle afin d'éviter une obscurité complète pendant la nuit.

Ce vecteur initial permet ensuite de déterminer un profil de commande initial permettant de commander un ou plusieurs des équipements du véhicule automobile 1.

Dans cette description, on entend par « profil de commande », un ensemble d'instructions de commande destinées à piloter un ou plusieurs des équipements du véhicule automobile 1 de manière à adapter la conduite et le confort des occupants du véhicule en fonction des données initiales caractéristiques à l'instant considéré. En d'autres termes, le profil de commande correspond à une ambiance multisensorielle particulière.

En pratique, chaque profil de commande est ici représenté par un vecteur de profil associé. Chaque composante de chaque vecteur de profil présente une valeur traduisant les instructions de commande correspondantes.

Ici, la mémoire du calculateur 3 mémorise une pluralité de profils de commande prédéterminés (chaque profil de commande correspond donc à une ambiance multisensorielle distincte). Ces profils de commande prédéterminés (et plus particulièrement les vecteurs de profil associés) sont déterminés en amont de la mise en œuvre du procédé de commande par l'intermédiaire d'un procédé préliminaire qui est décrit ultérieurement dans cette description.

A l'étape E8, le calculateur 3 sélectionne, parmi la pluralité de profils de commande prédéterminés, le profil de commande initial, c'est-à-dire le vecteur de profil correspondant au vecteur initial (et donc aux données initiales à l'instant $t_0$).

Cette sélection est par exemple effectuée en déterminant le profil de commande prédéterminé qui correspond le mieux au vecteur initial. En pratique, cela est par exemple effectué par un calcul de distances entre le vecteur initial et chacun des vecteurs de profil correspondant respectivement à chacun des profils de commande prédéterminés. Ce calcul est par exemple effectué en utilisant une méthode des moindres carrés.

Le profil de commande initial est ensuite sélectionné comme correspondant à la plus petite distance calculée entre le vecteur initial et le vecteur de profil concerné (correspondant donc un profil de commande prédéterminé particulier).

En variante, le profil de commande initial peut être directement sélectionné par un occupant du véhicule automobile (par exemple le conducteur). Par exemple, le conducteur choisira un profil de commande initial en fonction de ses envies.

Ce profil de commande initial est ensuite émis par le calculateur 3 afin de piloter les différents équipements du véhicule automobile 1 concernés (étape E10).

L'ambiance multisensorielle associée se diffuse donc dans le véhicule automobile 1.

Dans l'exemple mentionné précédemment, cela signifie alors que les haut-parleurs présents dans l'habitacle diffusent une musique correspondant aux préférences du conducteur du véhicule 1 sur une autoroute dans les conditions associées au moment de la journée et à la localisation déterminée et que la température à l'intérieur de l'habitacle 7 est réglée à 19 degrés.

Pour la suite du procédé, le profil de commande initial est nommé « profil de commande courant » (faisant référence au profil de commande émis dans le véhicule automobile 1).

Comme cela est représenté sur la [Fig.2], le procédé de commande se poursuit à l'étape E12, lors de laquelle la variable temporelle t est incrémentée d'un pas de temps prédéterminé. L'instant auquel sont mises en œuvre les étapes suivantes (après incré-mentation) est appelé dans la suite « instant courant ».

Les étapes E12 à E42 sont ici mises en œuvre en boucle à un pas de temps régulier. Par exemple, elles sont mises en œuvre toutes les secondes, lors du déplacement du véhicule automobile 1. En variante, le pas de temps pourrait bien sûr être supérieur à une seconde, par exemple de l'ordre de la dizaine de secondes.

A l'étape E14, le calculateur 3 actualise les données initiales avec les nouvelles valeurs instantanées des paramètres. Comme pour les données initiales, les données actualisées caractérisent l'état du véhicule automobile à l'instant courant, ainsi que l'environnement extérieur qui entoure le véhicule 1. Les données actualisées comprennent également des données caractérisant les occupants du véhicule et leurs préférences à l'instant courant.

Les paramètres dont la valeur n'a pas évolué par rapport à l'instant précédent ne sont pas modifiés (et conservent donc la valeur des données initiales). Cela permet alors d'actualiser uniquement les valeurs des paramètres qui ont été modifiées depuis l'instant précédent puisque chacun des paramètres compris dans ces données initiales présentent leur propre fréquence d'évolution. Par exemple, l'âge du conducteur ne changera qu'avec le changement de personne, tandis que la direction de regard du conducteur changera de manière plus fréquente (lorsque le conducteur bouge la tête ou qu'il regarde dans les rétroviseurs par exemple).

Le procédé se poursuit ensuite à l'étape E16 lors de laquelle le calculateur 3 détermine un vecteur actualisé (de manière similaire à la détermination du vecteur initial décrite précédemment). Ce vecteur actualisé dépend des données actualisées reçues à l'étape E14. Le vecteur actualisé est de dimension supérieure ou égale à 2.

Puis, à partir de ce vecteur actualisé, le calculateur détermine un « paramètre d'opportunité de changement de commande » (étape E18). Ce paramètre d'opportunité de changement de commande évalue l'opportunité de changer de profil de commande suite à l'actualisation des données. En d'autres termes, ce paramètre d'opportunité de changement de commande permet d'évaluer si un autre profil de commande serait plus adapté aux données actualisées que le profil de commande courant, pour la conduite du véhicule automobile.

On entend par « changement de profil de commande », le remplacement du profil de commande courant par un profil de commande plus adapté aux données actualisées (ce profil de commande étant sélectionné parmi les profils de commande prédéterminés mémorisés dans la mémoire du calculateur 3).

Le paramètre d'opportunité de changement de commande dépend du vecteur actualisé déterminé à l'étape E14. Ce paramètre est calculé, pour chaque profil de commande prédéterminé, à partir du vecteur actualisé et du vecteur de profil correspondant au profil de commande prédéterminé concerné.

Par exemple, pour chaque profil de commande prédéterminé, le calculateur 3 calcule la distance entre le vecteur actualisé et le vecteur de profil correspondant à ce profil de commande prédéterminé. Ce calcul est par exemple effectué en utilisant une méthode des moindres carrés.

Ainsi, à l'issue de l'étape E18, le calculateur 3 a déterminé autant de paramètres d'opportunité de changement de commande qu'il y a de profils de commande prédéterminés mémorisés.

Puis, le calculateur 3 compare chacun des paramètres d'opportunité de changement de commande entre eux afin de sélectionner le profil de commande le plus adapté (E20).

Dans le cas où le paramètre d'opportunité de changement de commande est déterminé à partir d'un calcul de distance, la sélection du profil de commande le plus adapté (également nommé profil de commande actualisé dans la suite) est effectuée en choisissant celui correspondant à la plus petite distance calculée (comme c'était le cas pour la sélection du profil de commande initial).

Comme le montre la [Fig.2], le procédé se poursuit ensuite à l'étape E22, lors de laquelle le calculateur 3 évalue si le profil de commande actualisé sélectionné est le même que le profil de commande courant.

Si c'est le cas (c'est-à-dire si le profil de commande actualisé et le profil de commande courant sont identiques), le procédé se poursuit à l'étape E30.

Lors de cette étape, le calculateur 3 détermine si un point d'intérêt ponctuel (tel qu'un événement ponctuel) et/ou local (telle que la date, le moment de la journée ou un point d'intérêt géographique) est présent dans l'environnement du véhicule automobile 1. A titre d'exemple, une école forme un point d'intérêt géographique dans le sens où ce lieu constitue une zone à risque sur laquelle il faudra attirer l'attention du conducteur du véhicule automobile 1. Des monuments historiques ou des paysages particuliers (océan, chute d'eau) forment également des points d'intérêt géographiques.

Cette détermination s'effectue, à partir de la position du véhicule automobile 1 et des bases de données cartographiques mémorisées dans la mémoire du calculateur, selon les sous-étapes suivantes.

Tout d'abord, le calculateur 3 identifie l'ensemble des points d'intérêt géographiques présents, à l'instant courant, dans une zone prédéterminée entourant le véhicule automobile 1. Cette zone prédéterminée est par exemple un carré de quelques kilomètres de côté et dont le véhicule automobile 1 forme le centre.

Une première sélection est opérée parmi tous les points d'intérêts identifiés dans cette zone. Cette sélection est par exemple effectuée en ne conservant que les N points d'intérêts les plus proches du véhicules automobiles (N étant un nombre réduit par rapport à l'ensemble des points d'intérêt identifiés dans la zone prédéterminée).

Puis, un score est calculé pour chacun des N points d'intérêt sélectionnés. Pour chaque point d'intérêt sélectionné, ce score est calculé en tenant compte de la visibilité du point d'intérêt par les occupants du véhicule automobile 1 mais également de l'intérêt du point d'intérêt lui-même. Par intérêt du point d'intérêt, on entend l'importance historique, et/ou l'intérêt récréatif, et/ou les événements prévus dans le lieu correspondant et/ou le risque associé à ce lieu. Le calcul de ce score tient également compte des préférences des occupants du véhicule automobile, par exemple en appliquant un coefficient de pondération associé aux préférences des occupants (ce coefficient prenant par exemple une valeur proche de 1 pour un point d'intérêt pour lequel les occupants ont manifesté un intérêt, et une valeur proche de 0, dans le cas d'un intérêt limité).

En pratique, la valeur par défaut du score est de 1 pour chacun des points d'intérêt. Cette valeur est ensuite soit mise à jour explicitement par l'utilisateur sur son initiative ou en répondant à un questionnaire initié par le calculateur, soit mise à jour par un algorithme ultérieur interprétant les actions des occupants du véhicule automobile 1 ou d'une action, dans le véhicule, interprétée comme un signe d'appréciation ou de rejet par le calculateur 3. Le score est alors incrémenté ou décrémenté progressivement.

La visibilité du point d'intérêt est déterminée selon la méthode décrite dans le document FR2112820.

Le calculateur 3 détermine enfin le point d'intérêt le plus pertinent par comparaison des scores obtenus. Par exemple, il sélectionne le point d'intérêt correspondant au score le plus élevé.

Si ce score est supérieur à un seuil prédéterminé, le calculateur 3 considère qu'un point d'intérêt, qui mérite l'attention des occupants du véhicule automobile 1, est détecté dans l'environnement de ce véhicule 1. Dans ce cas, le procédé se poursuit à l'étape E32 lors de laquelle le calculateur 3 détermine un profil de commande spécifique associé à ce point d'intérêt sélectionné.

En pratique, les profils de commande spécifiques sont mémorisés en amont dans la mémoire du calculateur 3. Il existe autant de profils de commande que de points d'intérêt géographiques et d'événements temporels (par exemple un anniversaire ou une alerte d'agenda préalablement programmée). Les profils de commande spécifiques sont génériques de manière à couvrir l'ensemble des cas rencontrés. Toutefois, un profil de commande spécifique peut être conçu spécifiquement pour certains points d'intérêts particuliers (comme les monuments historiques par exemple).

Puis le procédé se poursuit à l'étape E34. Lors de cette étape, le calculateur 3 évalue un critère supplémentaire caractérisant la pertinence d'émission du profil de commande spécifique associé à ce point d'intérêt.

Ce critère supplémentaire caractérise la pertinence de l'émission du profil de commande spécifique associé au point d'intérêt à l'instant courant afin d'attirer l'attention des occupants du véhicule automobile 1 sur ce point d'intérêt identifié. En d'autres termes, ce critère supplémentaire permet d'évaluer s'il est judicieux de diffuser ce profil de commande spécifique dans le véhicule automobile 1, afin que cela soit bénéfique pour les occupants du véhicule.

Par exemple, le critère supplémentaire tient compte de la durée écoulée depuis la sélection du profil de commande courant. Cela permet d'éviter un changement trop rapide alors que le profil de commande courant est émis depuis peu de temps.

Le critère supplémentaire peut également tenir compte de la fréquence de changement de profils de commande. Cela permet d'éviter l'émission successive de profils de commande différents pouvant conduire à une lassitude et un épuisement des occupants du véhicule automobile 1.

En variante, le critère supplémentaire peut tenir compte d'un indicateur de préférence associé à l'un des occupants du véhicule automobile. Cet indicateur de préférence peut par exemple être mémorisé dans la mémoire du calculateur 3. Par exemple, le conducteur du véhicule automobile 1 a indiqué précédemment avoir apprécié un profil de commande particulier, celui-ci pourra être émis à nouveau lorsqu'un point d'intérêt correspondant se trouvera dans l'environnement du véhicule automobile 1.

Par exemple, ce critère supplémentaire peut être évalué sur la base du calcul d'un coefficient d'intérêt $Int_c$ défini par l'expression suivante :

[Math.2]
$$Int_c = \exp\ (-kt)$$

avec t l'instant courant et k un coefficient dit d'érosion. Ce coefficient d'érosion k tient donc compte du fait que les occupants du véhicule automobile 1 pourraient être lassés et fatigués des changements incessants de commandes (et donc d'ambiances multisensorielles).

Ce critère supplémentaire dépend également d'un coefficient de stimulation de l'intérêt. Ce coefficient de stimulation d'intérêt permet de stimuler l'intérêt des occupants avec des ambiances multisensorielles (associées à des profils de commande) qui n'ont pas été diffusées dans le véhicule automobile 1 depuis une période de temps prédéterminée. Cette période de temps prédéterminée est par exemple de l'ordre de quelques mois. Ainsi, ce coefficient de stimulation de l'intérêt apporte une pondération dans la détermination du critère supplémentaire vis-à-vis de certains profils de commande qui n'auraient pas été diffusés depuis longtemps. Cela permet ici aussi de limiter la lassitude et l'ennui des occupants du véhicule automobile.

Quel que soit le critère supplémentaire considéré, si le calculateur 3 évalue (à l'étape E34) que ce critère est vérifié, le procédé se poursuit à l'étape E36. Lors de cette étape, le profil de commande spécifique, associé au point d'intérêt, est émis par le calculateur 3 afin de piloter les différents équipements du véhicule automobile 1 concernés. L'ambiance multisensorielle associée se diffuse donc dans le véhicule automobile 1 et permet alors d'attirer l'attention des occupants du véhicule automobile 1 sur le point d'intérêt identifié. En pratique, la transition d'un profil de commande à un autre est effectuée en fonction de paramètres associés au nouveau profil de commande à émettre. Cette transition est réalisée de manière à garantir l'ambiance multisensorielle recherchée avec l'émission du nouveau profil de commande (ici le profil de commande spécifique). La transition d'un profil de commande à un autre se fait également en tenant compte du contexte automobile (par exemple en mode « sport », les transitions seront plus rapides et franches) et des préférences des occupants du véhicule automobile (qui sont indiquées par les occupants eux-mêmes ou déduites par un algorithme d'interprétation des actions des occupants dans le véhicule automobile).

Par exemple, si le point d'intérêt identifié est une école sur une partie droite de la route sur laquelle se déplace le véhicule automobile 1, le profil de commande spécifique comprend l'émission d'une alerte sonore du côté droit de l'habitacle lorsque le véhicule circule le long de cette école.

Le profil de commande spécifique est ici émis de manière ponctuelle sur une durée prédéterminée. Cette durée est associée au point d'intérêt. En d'autres termes, le profil de commande spécifique est émis par exemple tant que le point d'intérêt identifié se trouve dans la zone prédéterminée entourant le véhicule automobile 1. Dans l'exemple de l'école, l'alerte sonore est émise dans une zone à proximité de l'école et s'arrête une fois que le véhicule automobile 1 a dépassé cette école.

Ce profil de commande spécifique peut par exemple être émis seul (le profil de commande courant étant donc interrompu) ou en superposition du profil de commande courant.

Le procédé de commande reprend ensuite à l'étape E12 lors que laquelle la variable temporelle est incrémentée d'un pas de temps pour exécuter le procédé de commande à l'instant suivant.

Si, à l'étape 32, le critère supplémentaire n'est pas vérifié, seul le profil de commande courant continue d'être émis dans le véhicule automobile 1. Le procédé se reprend alors à l'étape E12.

Si, à l'étape E30, le score associé au point d'intérêt sélectionné est inférieur au seuil prédéterminé, il n'est pas nécessaire d'attirer l'attention des occupants à son sujet. Seul le profil de commande courant continue d'être émis dans le véhicule automobile 1. Le procédé reprend à l'étape E12.

Si, à l'étape E22, le calculateur 3 a conclu que le profil de commande actualisé sélectionné était différent du profil de commande courant, le procédé se poursuit à l'étape E40. Comme les deux profils de commande sont différents, le profil de commande pourrait être changé mais le calculateur 3 évalue d'abord la possibilité d'un changement de profil de commande. En d'autres termes, à l'étape E40, le calculateur 3 détermine s'il est pertinent, à l'instant courant, de modifier le profil de commande courant par le profil de commande actualisé.

Pour cela, le calculateur 3 évalue un « critère supplémentaire » caractérisant la pertinence d'un changement de profil de commande à l'instant courant. En d'autres termes, le critère supplémentaire permet d'évaluer s'il est judicieux de changer le profil de commande courant. Ce critère supplémentaire caractérise donc la pertinence d'un changement de profil de commande à l'instant courant afin que ce changement soit bénéfique pour les occupants du véhicule automobile 1. Cette étape est similaire à l'étape E34 décrite précédemment.

Comme indiqué, ce critère supplémentaire tient compte de la durée écoulée depuis la sélection du profil de commande courant. Il tient également compte de la fréquence de changement de profils de commande.

Ce critère supplémentaire peut également concerner la présence d'un événement remarquable (par exemple un orage à venir) pour les occupants du véhicule ou dans leur environnement. Le changement du profil de commande permettrait alors de mettre en valeur ou d'alerter sur cet événement remarquable.

Ici aussi, le critère supplémentaire peut tenir compte d'un indicateur de préférence associé à l'un des occupants du véhicule automobile.

Quel que soit le critère supplémentaire considéré, si le calculateur 3 évalue (à l'étape E40) que ce critère est vérifié, le procédé se poursuit à l'étape E42. Lors de cette étape, le profil de commande actualisé est émis par le calculateur 3 afin de piloter les différents équipements du véhicule automobile 1 concernés. L'ambiance multisensorielle associée se diffuse donc dans le véhicule automobile 1.

Comme indiqué précédemment, la transition du profil de commande courant au profil de commande actualisé est effectuée en fonction de paramètres associés à ce profil de commande actualisé. En d'autres termes, la transition s'effectue de manière à être cohérente avec l'ambiance multisensorielle visée.

Ce profil de commande actualisé devient alors le profil de commande courant. Le procédé se poursuit par l'étape E30 (telle que décrite précédemment).

Si, à l'étape E40, le critère supplémentaire n'est pas vérifié, le profil de commande actualisé n'est pas utilisé par le calculateur 3 et le procédé se poursuit à l'étape E30 décrite précédemment.

Bien entendu, le conducteur ou les occupants du véhicule automobile 1 peuvent à tout moment désactiver l'émission de profil de commande. Dans ce cas, aucun profil de commande n'est émis dans le véhicule automobile et aucune ambiance multisensorielle n'y est diffusée.

Comme indiqué précédemment, les profils de commande sont prédéterminés, préalablement à la mise en œuvre du procédé décrit supra, par l'intermédiaire d'un « procédé préliminaire de détermination d'une pluralité de profils de commande prédéterminés ».

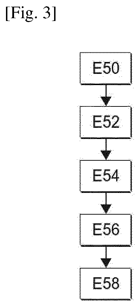

Ce procédé préliminaire est en pratique mis en œuvre lors de la conception du véhicule. Il comprend une succession d'étapes représentée sur la [Fig.3], sous la forme d'un logigramme, qui permettent d'identifier plusieurs profils de commande utilisables.

Chaque profil de commande prédéterminé repose sur une succession d'instructions synchronisées entre elles pour chaque équipement du véhicule automobile 1. De manière illustrée, chaque profil de commande peut être vu comme une partition (au sens musical) d'instructions de chaque équipement du véhicule automobile. En d'autres termes, les instructions de chaque profil de commande sont donc coordonnées et combinées de manière cohérente afin d'obtenir une ambiance multisensorielle associée agréable pour les occupants du véhicule (lorsque celle-ci est diffusée dans le véhicule).

Pour cela, le procédé préliminaire débute à l'étape E50. Lors de cette étape, le calculateur 3 détermine, pour chaque équipement du véhicule automobile 1, une pluralité de listes d'instructions de commande de cet équipement. Chaque liste d'instructions de commande correspond à une représentation de l'ambiance multisensorielle souhaitée, associée au profil de commande concerné.

Chaque liste d'instructions de commande (pour chaque équipement) prend en compte les différents signaux impliqués, leur durée, leur intensité, etc. Par exemple, pour l'émission d'une succession de signaux sonores, une liste d'instructions de commande comprend l'ordre des signaux diffusés, la durée de diffusion de chacun signal sonore, le volume de diffusion de chaque signal sonore, les transitions permettant le passage de l'un à l'autre des signaux sonores, etc.

Ainsi, à l'issue de l'étape E50, le calculateur 3 dispose de différentes listes d'instructions de commande pour chaque équipement du véhicule automobile 1 (de manière indépendante des autres équipements).

Le procédé se poursuit à l'étape E52 lors de laquelle le calculateur 3 génère une pluralité de matrices d'instructions, chacune étant associée à une ambiance multisensorielle souhaitée. Chaque matrice d'instructions regroupe les instructions associées à cette ambiance multisensorielle pour tous les équipements du véhicule automobile 1.

Puis, pour chaque ambiance multisensorielle, les instructions de chaque matrice d'instructions sont agencées temporellement de manière à assurer leur synchronisation (étape E54). En d'autres termes, la durée de chacune des instructions pour chaque équipement est adaptée en fonctions des instructions des autres équipements de manière à pouvoir générer l'ambiance multisensorielle recherchée. Une pluralité de matrices finales est ainsi déterminée. Dans ces matrices finales, les instructions de commande des différents équipements du véhicule automobile sont synchronisées.

Comme le montre la [Fig.3], le procédé se poursuit à l'étape E56. Lors de cette étape, les instructions de commande de chaque matrice finale sont converties afin de pouvoir être exécutées par le calculateur 3 (afin de piloter, de manière synchroniser, les différents équipements du véhicule automobile 1). Cela permet alors de générer, à partir de chaque matrice finale, un profil de commande associé à l'ambiance multisensorielle recherchée.

Une pluralité de profils de commande prédéterminés est donc déterminée à partir de la pluralité de matrices finales.

Ces profils de commande prédéterminés sont ensuite mémorisés, à l'étape E58, dans la mémoire du calculateur 3, afin d'être utilisé lors du procédé de commande tel que décrit précédemment.

**Revendications**

1. Procédé de commande d'au moins un équipement d'un véhicule automobile (1), le procédé comprenant des étapes :

   à un premier pas de temps,

   - réception (E4) d'une pluralité de données caractérisant un état du véhicule automobile (1), l'environnement extérieur au véhicule automobile (1) et des données concernant au moins un occupant du véhicule automobile (1),
   - détermination (E6) d'un vecteur initial sur la base de la pluralité de données reçues, **caractérisé en ce que** le procédé comprend également les étapes :

   - sélection (E8), parmi une pluralité de profils de commande prédéterminés dudit au moins un équipement, d'un premier profil de commande en fonction du vecteur initial,
   - émission (E10) dudit premier profil de commande de manière à commander ledit au moins un équipement du véhicule automobile (1), puis, à un deuxième pas de temps,
   - actualisation (E14) d'une partie au moins de la pluralité de données caractérisant l'état du véhicule automobile (1) et l'environnement extérieur au véhicule automobile (1),
   - détermination (E16) d'un vecteur actualisé sur la base des données actualisées,
   - sélection (E20) d'un deuxième profil de commande en fonction du vecteur actualisé, et

   si le deuxième profil de commande est différent dudit premier profil de commande,

   - émission (E42) dudit deuxième profil de commande de manière à actualiser la commande dudit au moins un équipement du véhicule automobile (1).

2. Procédé selon la revendication 1, comprenant également une étape d'évaluation (E40) d'un critère supplémentaire relatif à la pertinence d'un changement de profil de commande dudit au moins un équipement, ladite étape d'émission (E42) du deuxième profil de commande étant mise en œuvre si le critère supplémentaire évalué est vérifié.

3. Procédé selon la revendication 2, dans lequel le critère supplémentaire dépend de la durée écoulée depuis la sélection du premier profil de commande et/ou d'une fréquence de changement de profils de commande et/ou de la présence d'un point d'intérêt identifié dans l'environnement du véhicule automobile (1).

4. Procédé selon la revendication 2 ou 3, dans lequel le critère supplémentaire dépend également d'un indicateur de préférence associé à un occupant du véhicule automobile (1).

5. Procédé l'une quelconque des revendications 1 à 4, dans lequel, la sélection du deuxième profil de commande est mise en œuvre par la détermination (E18), pour chaque profil de commande prédéterminé, d'un paramètre d'opportunité de changement de commande, en fonction dudit vecteur actualisé et d'un vecteur de profil correspondant à ce profil de commande prédéterminé.

**6.** Procédé selon la revendication 5, dans lequel, pour chaque profil de commande prédéterminé, le paramètre d'opportunité de changement de commande est déterminé par le calcul d'une distance entre le vecteur actualisé et le vecteur de profil correspondant à ce profil de commande.

**7.** Procédé selon la revendication 6, dans lequel le deuxième profil de commande est sélectionné comme correspondant au paramètre d'opportunité de changement de commande associé à la plus petite distance calculée.

**8.** Procédé selon l'une quelconque des revendications 1 à 7, comprenant également des étapes de :

- localisation (E30) d'un point d'intérêt ponctuel et/ou local dans l'environnement du véhicule automobile (1),
- détermination (E32) d'un profil de commande spécifique associé audit point d'intérêt, et
- émission (E36) dudit profil de commande spécifique de manière à commander ledit au moins un équipement du véhicule automobile (1).

**9.** Procédé selon la revendication 8, dans lequel l'émission du profil de commande spécifique se produit de manière ponctuelle pendant une durée prédéterminée, ladite durée prédéterminée étant préférentiellement associée au point d'intérêt.

**10.** Procédé selon l'une quelconque des revendications 1 à 9, comprenant, en amont, des étapes de :

- détermination (E50) d'une première liste d'instructions pour un premier équipement du véhicule automobile (1),
- détermination (E50) d'une deuxième liste d'instructions pour un deuxième équipement du véhicule automobile (1),
- détermination (E54) d'une matrice finale par combinaison de manière synchrone de la première et de la deuxième liste d'instructions, et
- détermination (E56) d'un profil de commande sur la base de la matrice finale déterminée afin de commander de manière synchronisée le premier équipement et le deuxième équipement.

**11.** Véhicule automobile (1) comprenant un calculateur (3) configuré pour mettre en œuvre le procédé de commande selon les revendications 1 à 10.

**Patentansprüche**

**1.** Verfahren zum Steuern mindestens einer Vorrichtung eines Kraftfahrzeuges (1), wobei das Verfahren folgende Schritte umfasst:

in einem ersten Zeitschritt,

- Empfangen (E4) einer Mehrzahl von Daten, die einen Zustand des Kraftfahrzeugs (1), die Umgebung außerhalb des Kraftfahrzeugs (1) kennzeichnen, und von Daten, die mindestens einen Insassen des Kraftfahrzeugs (1) betreffen;
- Bestimmen (E6) eines Ausgangsvektors auf der Grundlage der Mehrzahl von empfangenen Daten, **dadurch gekennzeichnet, dass** das Verfahren auch die folgenden Schritte umfasst:

- Auswählen (E8), aus einer Mehrzahl von vorbestimmten Steuerprofilen der mindestens einen Vorrichtung, eines ersten Steuerprofils in Abhängigkeit von dem Ausgangsvektor,
- Senden (E10) des ersten Steuerprofils, so dass die mindestens eine Vorrichtung des Kraftfahrzeugs (1) gesteuert wird, dann, in einem zweiten Zeitschritt,
- Aktualisieren (E14) mindestens eines Teils der Mehrzahl von Daten, die den Zustand des Kraftfahrzeugs (1) und die Umgebung außerhalb des Kraftfahrzeugs (1) kennzeichnen;
- Bestimmen (E16) eines aktualisierten Vektors auf der Grundlage der aktualisierten Daten;
- Auswählen (E20) eines zweiten Steuerprofils in Abhängigkeit von dem aktualisierten Vektor, und

wenn das zweite Steuerprofil von dem ersten Steuerprofil verschieden ist,

- Senden (E42) des zweiten Steuerprofils, so dass die Steuerung der mindestens einen Vorrichtung des Kraftfahrzeugs (1) aktualisiert wird.

**2.** Verfahren nach Anspruch 1, umfassend auch einen Schritt des Bewertens (E40) eines zusätzlichen Kriteriums bezüglich der Relevanz einer Änderung des Steuerprofils der mindestens einen Vorrichtung, wobei der Schritt des Sendens (E42) des zweiten Steuerprofils durchgeführt wird, wenn das bewertete zusätzliche Kriterium erfüllt ist.

**3.** Verfahren nach Anspruch 2, wobei das zusätzliche Kriterium von der seit dem Auswählen des ersten Steuerprofils vergangenen Zeitdauer und/oder von einer Steuerprofiländerungshäufigkeit und/oder von dem Vorhandensein eines ermittelten Punkts von Interesse in der Umgebung des Kraftfahrzeugs (1) abhängt.

4. Verfahren nach Anspruch 2 oder 3, wobei das zusätzliche Kriterium auch von einem Präferenzindikator abhängt, der einem Insassen des Kraftfahrzeugs (1) zugeordnet ist.

5. Verfahren nach einem der Ansprüche 1 bis 4, wobei das Auswählen des zweiten Steuerprofils durch das Bestimmen (E18), für jedes vorbestimmte Steuerprofil, eines Steueränderungszweckmäßigkeitsparameters in Abhängigkeit von dem aktualisierten Vektor und von einem diesem vorbestimmten Steuerprofil entsprechenden Profilvektor durchgeführt wird.

6. Verfahren nach Anspruch 5, wobei für jedes vorbestimmte Steuerprofil der Steueränderungszweckmäßigkeitsparameter durch das Berechnen eines Abstands zwischen dem aktualisierten Vektor und dem diesem Steuerprofil entsprechenden Profilvektor bestimmt wird.

7. Verfahren nach Anspruch 6, wobei das zweite Steuerprofil als dem Steueränderungszweckmäßigkeitsparameter entsprechend ausgewählt wird, der dem kleinsten berechneten Abstand zugeordnet ist.

8. Verfahren nach einem der Ansprüche 1 bis 7, umfassend auch folgende Schritte:

    - Lokalisieren (E30) eines punktuellen und/oder lokalen Punkts von Interesse in der Umgebung des Kraftfahrzeugs (1);
    - Bestimmen (E32) eines spezifischen Steuerprofils, das dem Punkt von Interesse zugeordnet ist, und
    - Senden (E36) des spezifischen Steuerprofils, so dass die mindestens eine Vorrichtung des Kraftfahrzeugs (1) gesteuert wird.

9. Verfahren nach Anspruch 8, wobei das Senden des spezifischen Steuerprofils punktuell während einer vorbestimmten Zeitdauer erfolgt, wobei die vorbestimmte Zeitdauer vorzugsweise dem Punkt von Interesse zugeordnet ist.

10. Verfahren nach einem der Ansprüche 1 bis 9, umfassend, vorgelagert, folgende Schritte:

    - Bestimmen (E50) einer ersten Anweisungsliste für eine erste Vorrichtung des Kraftfahrzeugs (1);
    - Bestimmen (E50) einer zweiten Anweisungsliste für eine zweite Vorrichtung des Kraftfahrzeugs (1);
    - Bestimmen (E54) einer endgültigen Matrix durch synchrones Kombinieren der ersten und der zweiten Anweisungsliste, und
    - Bestimmen (E56) eines Steuerprofils auf der Grundlage der bestimmten endgültigen Matrix, um die erste Vorrichtung und die zweite Vorrichtung synchronisiert zu steuern.

11. Kraftfahrzeug (1), umfassend einen Rechner (3), der dazu ausgestaltet ist, das Verfahren zum Steuern nach den Ansprüchen 1 bis 10 durchzuführen.

## Claims

1. Method for controlling at least one device of a motor vehicle (1), the method comprising the following steps:

    in a first time increment,

        - receiving (E4) a plurality of data characterizing a state of the motor vehicle (1), the environment external to the motor vehicle (1) and data concerning at least one occupant of the motor vehicle (1),
        - determining (E6) an initial vector on the basis of the plurality of received data, **characterized in that** the method also comprises the following steps:

        - selecting (E8), from among a plurality of predetermined control profiles for controlling said at least one device, a first control profile on the basis of the initial vector,
        - outputting (E10) said first control profile so as to control said at least one device of the motor vehicle (1), and then, in a second time increment,
        - updating (E14) at least some of the plurality of data characterizing the state of the motor vehicle (1) and the environment external to the motor vehicle (1),
        - determining (E16) an updated vector on the basis of the updated data,
        - selecting (E20) a second control profile on the basis of the updated vector, and

    if the second control profile is different from said first control profile,

        - outputting (E42) said second control profile so as to update the control of said at least one device of the motor vehicle (1).

2. Method according to Claim 1, also comprising a step (E40) of evaluating an additional criterion relating to the relevance of a change of control profile for said at least one device, said step (E42) of outputting the second control profile being implemented if the evaluated additional criterion is satisfied.

3. Method according to Claim 2, wherein the additional criterion depends on the time that has elapsed since the first control profile was selected and/or on a frequency of changing of control profiles and/or on the presence of a point of interest identified in the environment of the motor vehicle (1).

4. Method according to Claim 2 or 3, wherein the additional criterion also depends on a preference indicator associated with an occupant of the motor vehicle (1).

5. Method as claimed in any one of Claims 1 to 4, wherein the second control profile is selected by determining (E18), for each predetermined control profile, a control change appropriateness parameter, on the basis of said updated vector and of a profile vector corresponding to this predetermined control profile.

6. Method according to Claim 5, wherein, for each predetermined control profile, the control change appropriateness parameter is determined by computing a distance between the updated vector and the profile vector corresponding to this control profile.

7. Method according to Claim 6, wherein the second control profile is selected as corresponding to the control change appropriateness parameter associated with the smallest computed distance.

8. Method according to any one of Claims 1 to 7, also comprising steps of:

   - locating (E30) a one-off and/or local point of interest in the environment of the motor vehicle (1),
   - determining (E32) a specific control profile associated with said point of interest, and
   - outputting (E36) said specific control profile so as to control said at least one device of the motor vehicle (1).

9. Method according to Claim 8, wherein the specific control profile is output on a one-off basis for a predetermined duration, said predetermined duration preferably being associated with the point of interest.

10. Method according to any one of Claims 1 to 9, comprising, beforehand, steps of:

   - determining (E50) a first list of instructions for a first device of the motor vehicle (1),
   - determining (E50) a second list of instructions for a second device of the motor vehicle (1),
   - determining (E54) a final matrix by synchronously combining the first and the second list of instructions, and
   - determining (E56) a control profile on the basis of the determined final matrix in order to synchronously control the first device and the second device.

11. Motor vehicle (1) comprising a computer (3) configured to implement the control method according to Claims 1 to 10.

[Fig. 1]

[Fig. 2]

[Fig. 3]

```
┌─────────┐
│   E50   │
└─────────┘
     │
     ▼
┌─────────┐
│   E52   │
└─────────┘
     │
     ▼
┌─────────┐
│   E54   │
└─────────┘
     │
     ▼
┌─────────┐
│   E56   │
└─────────┘
     │
     ▼
┌─────────┐
│   E58   │
└─────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021403039 A1
- EP 2895352 A

- FR 2112820